(19) Europäisches Patentamt

European Patent Office

Office européen des brevets

(11) **EP 1 424 450 A2**

(12) **EUROPEAN PATENT APPLICATION**

(43) Date of publication:
**02.06.2004 Bulletin 2004/23**

(51) Int Cl.7: **E02B 3/06**

(21) Application number: **03104356.5**

(22) Date of filing: **25.11.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **27.11.2002 IT MI20022517**

(71) Applicant: **Nautilus Coastal Systems S.r.l.
20123 Milano (IT)**

(72) Inventors:
 • **Bertoldi, Adriano
   20052, MONZA (Milano) (IT)**
 • **Abbiati, Massimo
   20133, MILANO (IT)**

(74) Representative:
**Faggioni, Carlo Maria, Dr. Ing. et al
Fumero
Studio Consulenza Brevetti Snc
Pettenkoferstrasse 20-22
80336 Munich (DE)**

(54) **High-efficiency breakwater barrier**

(57)    A floating breakwater barrier is disclosed, of the type comprising a foot anchoring said barrier to the seafloor, an anchoring structure, and a substantially parallelepipedal floating body, wherein the floating body features a section elongated in a sense parallel to the prevailing direction of the wave motion, the anchoring structure being linked to the floating body so as not to allow the floating body to shift horizontally, in either direction, by more than L(1-cos50°), where L is the linear length of the anchoring structure, and wherein said floating body imparts onto the anchoring means a traction per length unit at least equal to that imparted by a completely submerged volume having a unitary length and a section $(H_{max}^2)/15$, where $H_{max}$ is the maximum wave height in the installation site; according to a preferred embodiment, the anchoring means have the shape of sails made of a geotextile material and converge triangle-wise towards the point of docking to the floating body.

FIG.5

**EP 1 424 450 A2**

## Description

<u>Field of the invention</u>

The present invention relates to a breakwater barrier, in particular to a non-rigid breakwater barrier.

<u>Background</u>

Conventional works of coastal defence, such as outer dams and cast breakwaters, are economically burdensome and require a rather long planning and construction phase. In addition to environmental impact problems, these solutions may be unsuitable to protect limited coastal areas or for installations which are temporary or synergetic with other so-called "low-impact" works, such as beach nourishment. This has encouraged the search for alternative low-cost, easy-to-install solutions which have a preferably low environmental impact.

Among the solutions which where most carefully scrutinised by scientists and designers, floating breakwaters are those which best meet the criteria of inexpensiveness, quick installation and low environmental impact.

A great variety of these devices exists.

In the US patents no. 3,846,990, 3,848,419, and 3,691,774, floating barriers are disclosed, wherein the floating body is for the most part above water and exerts a damping effect resisting the wave motion; as a matter of fact, the floating body is anchored to the seafloor by a single long wire which allows said body to be tensioned by the current and to resist "parachute-like" to the wave motion. In these cases, only the drag capacity of the float body is exploited in order to absorb part of the energy contained in the waves, which energy inevitably discharges fully onto the anchoring means.

In US 5,304,005 a barrier is disclosed wherein the T-shaped floating body features a higher density in its bottom part producing an upright tilting effect. In this case, in addition to exploiting the parachute effect of the floating body, a return wave is also produced - thanks to the tilting moment of the centre of gravity - which slows down the main wave motion.

JP 51,145,139 discloses instead a large floating platform against which waves can break. The floating platform, however, is anchored at two end points thereof and therefore tends to move with such an oscillation that a "pumping" effect is produced, which feeds the wave motion downstream of the floating body. A similar construction, but further equipped with a breakwater side, is disclosed in US 3,953,977.

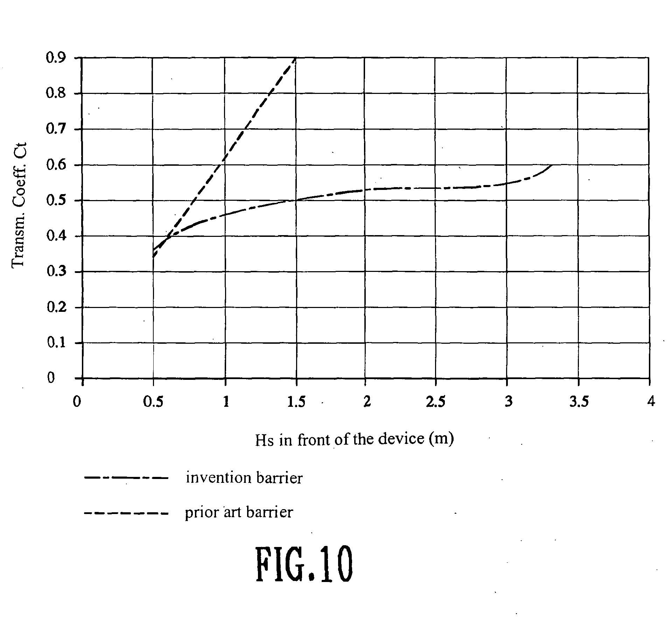

All these systems proved to be not entirely satisfying, in particular because - being free to float along with the waves - they do not have a marked damping effect, as is shown by the data in fig. 10 relative to the transmission coefficient of a prior art exemplary barrier. In order to obtain a significant damping effect, these devices should have sizeable dimensions compared to the wave length. However, a strong limit to admissible maximum size (and therefore to the effectiveness of these devices) exists: as a matter of fact, all the dissipated energy of the wave motion is inevitably discharged onto the structure and the anchoring means, and therefore - unless expensive, high-resistance materials are employed - it is impossible to install wide structures.

Furthermore, completely submerged barriers exist, for example in the shape of reliefs having a triangle section. These barriers normally consist of rigid water-proof plates: they dissipate the energy of the wave motion simply by resisting thereto.

Being substantially rigid, however, these barriers must be suitably anchored to the seafloor and involve heavy costs. Furthermore, they are in any case subject to breakage, as they completely absorb the energy of the oncoming waves.

In order to overcome these limitations, the Applicant addressed the problem of supplying a new kind of barrier which is more efficient, capable of exploiting also other energy dissipation mechanisms, and which allows to obtain high damping coefficients without excessively increasing the costs by using large structures or high-resistance materials.

Such object is achieved by a barrier such as the one described, in its essential features, in the accompanying claims.

<u>Brief description of the drawings</u>

Further details on the features and advantages of the device according to the invention will in any case be clearer from the following description of some preferred embodiments of the invention, given by way of example and illustrated in the accompanying drawings, wherein:

fig. 1 is a diagrammatic elevation view of a first prior art floating barrier;
fig. 2 is a diagrammatic elevation view of a second prior art floating barrier;

fig. 3 is a diagrammatic elevation view of a floating barrier with a rectangular floating body and a single anchoring means;

fig. 4 is a diagrammatic view of a known-type floating breakwater barrier;

fig. 5 is a diagrammatic elevation side view of a barrier according to the invention, the width thereof being comparable to that of fig. 4;

fig. 6 is a diagrammatic elevation view of a floating barrier according to the invention;

fig. 7 is a diagrammatic elevation side view of a further embodiment of the invention;

fig. 8 is a diagrammatic elevation side view of another embodiment of the invention;

figg. 9(A)-9(L) are diagrammatic side views of the working sequence of a barrier according to the invention facing oncoming waves;

fig. 10 is a comparison diagram of a barrier according to the invention with a prior art barrier such as the one shown in fig. 4.

Description of some preferred embodiments

A floating breakwater barrier is comprised, in a manner known per se, of a foot 1 anchoring said barrier to the seafloor, an anchoring structure 2, and a floating body 3.

It is here worthwhile pointing out that the term "floating body" identifies a body having an overall specific weight below that of the liquid in which it floats, therefore a body which is capable of rising to the surface due the buoyancy of Archimede's principle. In the following, particular reference will be made to a suitably submerged constrained floating body, but this does not imply that said body cannot partly emerge from the water free surface.

The anchoring structure, according to the invention, consists of two converging sail elements 2a and 2b, fixed at two points spaced apart on the seafloor, which are sloping in respect of the seafloor by an angle between 20° and 50°, preferably between 35° and 45°. The two stay elements can be made, for example, of geotextile material, of the type of those disclosed in patent application no. IT-MI99A002383. In particular, the permeability value normal to the plane measured by the EN ISO 11058 test of said geotextile material can be smaller than 530(m/s); and the characteristic opening size value measured by the EN ISO 12956 test can be below 4000(µm).

An anchoring structure consisting of such double sail, strongly tensioned (depending on the tension exerted by the floating body) within such a triangle arrangement, was proven to be particularly advantageous from several points of view.

One of these relates to the fact that such structure traps in a considerable, substantially static water mass, in respect of the outward environment. This mass is therefore an effective obstacle to wave motion propagation.

Furthermore, such structure is capable of resisting the compression exerted by the dynamic impact of the wave, both thanks to the tension by the floating body, and to the static water mass trapped in, which struggles to come out of the triangle bag of permeable material.

The anchoring structure 2, as mentioned above, can have such a height as to allow the floating body 3 to arrange itself partly above the water free surface or, preferably, being constrained to remain completely submerged (for example fig. 5).

The considerations made, also in the following, with reference to the water free surface, are to be intended as relating to quiet conditions.

According to the invention, the floating body is preferably submerged, in particular at a distance h below the free surface equal to:

$$Hmax/8 < h < Hmax/1,5$$

where Hmax is the maximum wave height in the barrier installation site. Within said value range, amongst other things, the triangular sail structure also offers increased efficiency.

This condition advantageously allows, on the one hand, to prevent the floating body from being exposed to the direct impact of the oncoming waves and, on the other, to fully exploit the buoyancy of Archimede's principle that can be developed by its body, which proves extremely useful to tension the sails below through sufficient traction.

Pertaining thereto, it was noticed that, in order to adequately tension and suspend the sails, the floating body must preferably develop a traction force (towards the water surface) per length unit at least equal to that generated - according to Archimede's principle - by an equivalent submerged volume with a unitary length and a section equal to $(Hmax^2)/15$, where Hmax is the maximum wave height measured on average in the installation site.

The floating body is of a substantially rectangular parallelepipedal shape, i.e. its width (intended as the dimension parallel to the wave movement direction) being definitely larger than its thickness, for example in a range from 3:1 up to 10:1.

The length (intended as the measure parallel to the coastline) of the floating body or of the series of adjacent bodies forming the barrier, shall be at least equal to the distance from the seashore to be protected: in a marine environment, for example, from 50 meters to dozens of kilometres, in a lake environment from 10 to hundreds of metres.

The elongated rectangular shape, as well as making the buoyancy of the floating volume more efficient, determines a particularly advantageous dynamic behaviour, as will be shown later in the text.

Furthermore, according to a preferred embodiment, the floating body is constrained, by the anchoring structure, at one point only, substantially near the hydrostatic buoyancy point, so that said body can pivot back and forth (in respect of the forward direction of the waves) without moving into any of the two directions along a horizontal plane by a measure exceeding L(1-cos50°), or preferably exceeding L(1-cos35°), where L is the length of the anchoring sail.

Preferably, the arrangement of the constraint point, combined with a specific arrangement of the masses, is such as to maintain the floating body, in a quiet condition, in a slightly bow-heavy asset in the direction of the oncoming waves (fig. 7).

According to a preferred embodiment, between the constraint point of the floating body 3 and the vertex of the converging, double-anchorage structure 2a,2b, it is provided a short connection portion 4 in the shape of a tension element or possibly as a geotextile sail, too. The length of this connection portion must be below a certain measure, so as to comply with the limitations in the horizontal movement mentioned above, for example it can be of the order of the thickness of the floating body.

The arrangement of the floating barrier according to the invention allows to obtain a dynamic behaviour, upon oncoming waves, which is particularly advantageous for damping the same, as is also better highlighted in the following.

First of all, it must be pointed out that the triangular structure consisting of geotextile sails (in any case of a somewhat permeable material) held and tensioned in an upright position by a floating body and trapping inside a mass of water, behaves like a dampener-shock absorber. As a matter of fact, this structure is similar to a bellows from which the water comes out only through the mesh of the geotextile sail, which causes a remarkable load loss and therefore energy dissipation: it is hence possible to reduce the impact of the wave motion without the barrier having to rigidly support the pressure of the wave motion.

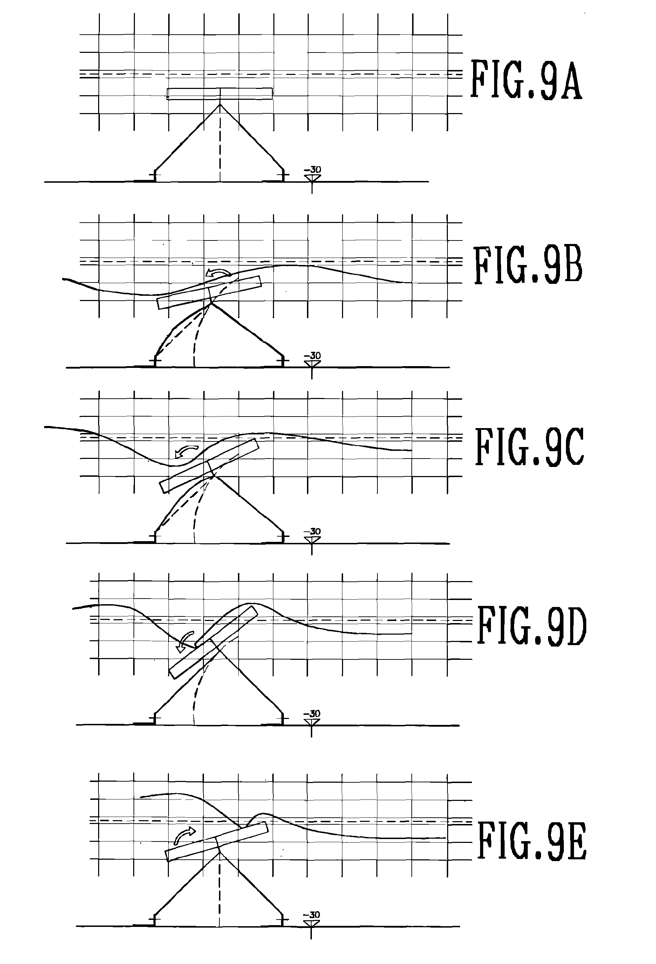

Furthermore, the floating body has - thanks to the kind of constraint offered by the invention - a specific effectiveness in dampening oncoming waves, which can be perceived also observing the dynamic behaviour of said body. With reference to figg. 9A-9L, let us assume that the open sea is on the left-hand side, whereas the shore is on the right-hand side, i.e. the wave motion is transmitted from left to right.

In fig.9A the quiet condition is represented. As can be seen, the water free surface in a quiet condition is represented by the phantom line and, in such condition, the floating body is fully submerged.

Upon arrival of the wave trough (fig. 9B), the floating body tends to follow the profile of the free surface, balancing forwards and moving leftwards towards the oncoming wave, thus tensioning the rear sail 2b. In this condition, the joining point between the floating body and the anchoring structure can only describe an arc of circle with the centre in the foot of the rear sail 2b.

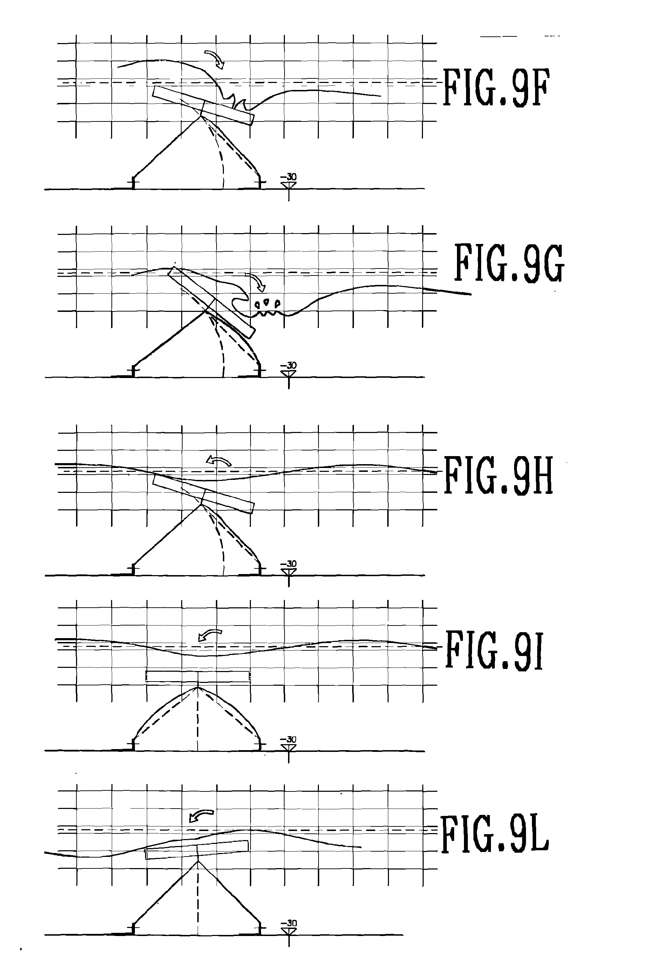

In fig. 9D the lower point of the wave trough has reached the floating body, which is no longer dragged forwards but tensions again both the sails 2a and 2b, and then it pushes said body to pivot backwards towards the shore side (fig. 9E), tensioning the front sail 2a (fig. 9F).

The wave descends along the floating body and breaks beyond it (fig. 9G).

The advantageous breaking of the wave causes a desired dissipation of energy, which energy substantially affects neither the anchoring structure nor the float.

Once the wave crest has passed (fig. 9H), the float is again pushed leftwards, returning into its position of neutral equilibrium.

In fig. 9L the barrier according to the invention is again in the initial equilibrium condition.

As can be guessed, the combined action of these sails with the specific float body according to the invention allows to obtain an advantageous energy dissipative effect without excessively loading the anchoring structure and the barrier itself.

As a matter of fact, the fluidodynamic interaction between the float and the wave imparts a breaking and slowing down of the wave which dampens the energy impact thereof; at the same time, however, since the float does not tend to resist "parachute-wise" to the wave, no excessive loads are placed onto the anchoring structure, positively affecting the life, cost, and hence effectiveness thereof. As a matter of fact, the breaking of the wave partially occurs onto the water downstream of the float body, and hence the wave does not destructively break onto the barrier.

Finally, the static mass of water trapped inside the triangular structure resists the wave motion, effectively contributing to the dissipative result, also thanks to the interaction with the permeable sails.

From this last point of view, also the embodiment shown in fig. 8, wherein the floating body is constrained to the anchoring sails at the ends thereof, has proven to have a certain damping effectiveness.

The inventors were able to experimentally verify the effectiveness of the barrier according to the invention, on the basis of which it was possible to determine satisfying damping coefficients, in any case much higher than those achievable with existing floating barriers, despite not requiring bulky dimensions and resistant and costly materials.

The results of these experiments are presented in the following.

The comparison was performed on the basis of the measurement of the wave transmission coefficients, downstream of the barrier structure, for the different kinds of barriers considered and in the same conditions of the generated wave motion. The measurements were collected on a scale model mounted in a wave motion channel.

The transmission coefficient value (Ct) resulted from the ratio of the significant wave height transmitted (Ht) measured 20 m behind the breakwater, to the significant wave height (Hs) measured at 80 m off the same.

Sample 1

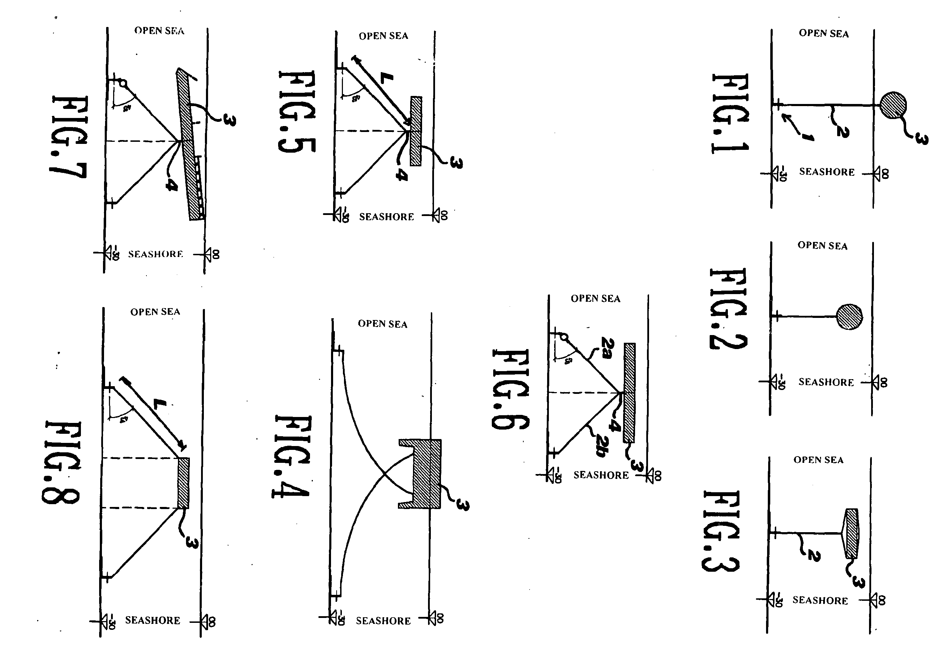

A breakwater barrier was installed having a cylindrical floating body with a diameter of 1,50 m and an overall height of the anchoring means, in the shape of a geotextile sail, of 6,40 m (fig. 1). When installing this embodiment, the float was allowed a maximum free upward shift of 40 cm which, added to the dimension of the float, could represent an obstacle with a theoretical useful height of +1.90 m a.s.l. The experiment showed a high transmission coefficient (0,932) due to the fact that the mobile barrier in fact followed the wave motion without producing any dissipative effect.

Sample 2

A barrier similar to that of sample 1 was installed in which (fig. 2) the height of the anchoring means was reduced to 4,00 m, thus maintaining the float submerged by 50 cm. The transmission coefficient dropped to 0,909, but from the behaviour of the float, it could be inferred that the cylindrical shape is not ideal, since - rolling over the wave - it hardly allows the sail to be tensioned and therefore to dampen incident waves.

Sample 3

A breakwater barrier was installed having a rectangular-section floating body 2,94 m wide and 0,60 m thick (fig. 3). The float was submerged by - 0,8 m a.s.l., and the resulting transmission coefficient was of 0,78.

Sample 4

A breakwater was installed having a floating body substantially similar to that of sample 3. However, a double-sail anchoring structure (fig. 5) was used, axially constrained to the float above and to the floor by a distance of 7,34 m below.

With this embodiment an extremely advantageous transmission coefficient of 0,508 was obtained.

Table 1 summarises the test conditions and the results obtained in this phase, the values of the reflection coefficient Cr included.

Table 1

| Sample | Hs inc off-shore | Hs inc at device | Cr off-shore | Cr at device | Hs at device | Hst transm. | Ct | damping % |
|---|---|---|---|---|---|---|---|---|
| N° | | m | | | m | m | | % |
| 1 | 1,46 | 1,44 | 0,119 | 0,125 | | | | |
| 2 | 1,47 | 1,45 | 0,124 | 0,139 | 1,48 | 1,34 | 0,909 | 9,08 |
| 3 | 1,51 | 1,49 | 0,171 | 0,192 | 1,54 | 1,20 | 0,779 | 22,14 |
| 4 | 1,49 | 1,52 | 0,289 | 0,315 | 1,66 | 0,84 | 0,508 | 49,19 |

The test confirmed that the most efficient arrangement is the one according to the invention, i.e. consisting of a rectangular-section float and of a double sail centrally joined near the axis of the floating body.

A peculiar comparison is also shown in the diagram of fig. 10, wherein a comparison of the values of Ct (transmission coefficient) is shown - measured on the basis of Hs (wave height) in front of the device - of a conventional double-anchoring breakwater (fig. 4), and of the breakwater proposed in the invention, both having a similar width (4 m).

The analysis demonstrates that the arrangement of the invention provides excellent results, especially if one considers that prior art floating breakwaters - anchored to the seafloor and completely transparent to the wave motion below the floating element (fig. 4) - are capable of damping wave patterns characterised by wave heights limited to 1÷1,50 m with periods limited to 4 ÷ 5,0 s.

Moreover, in order to be functional these known breakwaters should have a width equal to at least 1/4 of the wave length to be damped, whereas in the case of the proposed invention, laboratory tests indicate that such ratio can decrease even below 1/16, allowing to obtain the desired abatement effects by means of floats having a width four times smaller than that of currently manufactured breakwaters.

It is understood, however, that the invention is not limited to the specific embodiments illustrated above, which are only non-limiting examples of the scope of the invention, but that a number of variants are possible, all within the reach of a skilled person in the field, without departing from the scope of the invention.

## Claims

1. Floating breakwater barrier, of the type comprising a foot anchoring said breakwater to the seafloor, an anchoring structure, and a floating body of a substantially parallelepipedal shape, **characterised in that**
   the floating body features a section elongated in the direction parallel to the prevailing direction of the wave motion,
   the anchoring structure is joined to the floating body so as not to allow the floating body to shift horizontally, in either direction, by more than L(1-cos50°), where L is the linear length of the anchoring structure,
   said float imparts onto the anchoring means a traction per length unit at least equal to the one that might be imparted by a completely submerged volume having a unitary length and a section of $(Hmax^2)/15$, where Hmax is the maximum wave height in the installation site.

2. Floating breakwater barrier as claimed in claim 1), wherein said anchoring structure consists of two tension means, which converge towards each other and towards the floating body.

3. Floating breakwater barrier as claimed in claim 2), wherein said tension means are sloping in respect of the seafloor by an angle between 30° and 50°, preferably between 35° and 45°.

4. Floating breakwater barrier as claimed in any of the claims 2) to 3), wherein said tension means are fully or partly sails made of geotextile material.

5. Floating breakwater barrier as claimed in any of the claims 2) to 4), wherein said tension means converge triangle-wise substantially at the hydrostatic buoyancy centre of the floating body.

6. Floating breakwater barrier as claimed in any of the claims 2) to 4), wherein the anchoring structure is joined to the floating body at the ends thereof.

7. Breakwater barrier as claimed in claim 4), wherein said floating body is submerged for most of its volume at a distance h from the water free surface in static conditions equal to
   0 < h < Hmax
   where Hmax is the maximum wave height in the barrier installation site.

8. Non-rigid breakwater barrier, of the type comprising a foot anchoring said barrier to the seafloor, an anchoring structure, and a floating body, **characterised in that** said anchoring structure comprises two converging sails made of water-permeable material which are tensioned upwards by said floating body.

9. Barrier as claimed in claim 8), wherein said floating body imparts onto the anchoring means a traction per length unit at least equal to that which might be imparted by a completely submerged volume of a unitary length and a section $(Hmax^2)/15$, where Hmax is the maximum wave height in the installation site.

10. Barrier as claimed in claim 8) or 9), wherein said sails are made of geotextile material with a permeability value normal to the plane, measured by the EN ISO 11058 test, lower than 530(m/s) and a characteristic opening size value, measured by the EN ISO 12956 test, below 4000(μm).

11. Breakwater barrier as claimed in any of the claims 8) to 10), wherein the floating body features a rectangular section elongated in a direction parallel to the prevailing direction of the wave motion.

12. Barrier as claimed in claim 11), wherein said floating body is submerged at a distance h from the water free surface in static conditions equal to

0 < h < Hmax
where Hmax is the maximum wave height in the barrier installation site.

13. Barrier as claimed in claim 11) or 12), wherein the anchoring structure is joined to the floating body substantially at its hydrostatic buoyancy centre and is such as not to allow the floating body to shift horizontally, in either of the two directions, by an extent exceeding L(1-cos50°), where L is the linear length of the anchoring structure.

14. Floating breakwater barrier as claimed in claim 13), wherein said measure is below L(1-cos35°).

15. Floating breakwater barrier as claimed in claim 13) or 14), wherein said sails are sloping in respect of the seafloor by an angle between 30° and 50°, preferably between 35° and 45°.

16. Floating breakwater barrier as claimed in any of the claims 11) to 15), wherein said sails converge triangle-wise, and in the point of connection to said floating body a short connecting portion is provided.

17. Floating breakwater barrier as claimed in claim 16), wherein said short connecting portion is in the shape of tension means having a length in the order of the thickness of the floating body.

18. Floating breakwater barrier as claimed in any of the claims 8) to 15), wherein said sails are constrained at the ends of the floating body.

FIG.1

FIG.2

FIG.3

FIG.6

FIG.5

FIG.4

FIG.7

FIG.8

FIG.9A

FIG.9B

FIG.9C

FIG.9D

FIG.9E

FIG.9F

FIG.9G

FIG.9H

FIG.9I

FIG.9L

Hs in front of the device (m)

————·—  invention barrier

——————  prior art barrier

# FIG.10